# EUROPEAN PATENT APPLICATION

(11) **EP 4 844 359 A1**
(43) Date of publication of application: **25.11.2026**
(21) Application number: 24935862.3
(22) Date of filing: 27.11.2024
(51) Int. Cl.: G01M 7/02, B06B 1/04, H02K 33/18

(54) **ELECTRODYNAMIC VIBRATION GENERATOR**

(30) Priority: 15.04.2024 JP 2024065720
(71) Applicant: IMV Corporation, Osaka-shi, Osaka 555-0011 (JP)
(72) Inventor: YAMAMOTO, Koshi, Osaka-shi, Osaka 555-0011 (JP)
(74) Representative: Faggioni, Carlo Maria
(86) International application number: PCT/JP2024/042010
(87) International publication number: WO 2025/220262

(57) **Abstract**

To provide a vibration generator having a simplified configuration while maintaining accuracy. A current application circuit 30 is configured to apply a drive current to a drive coil 20. Initial control means 32 controls the current application circuit 30 to apply a direct current to the drive coil 20. The initial control means 32 controls the value of the direct current so that the vibration table 24 is held by the drive coil 20 at a reference point, for example, a midpoint of a vertically vibratable range. Upon completion of the initial setting as described above, drive control means 34 controls the current application circuit 30 so as to output a drive current obtained by superimposing a desired control current for vibration on the direct current. As a result, the drive current in which the desired control current is superimposed on the direct current is applied to the drive coil 20, thereby causing the vibration table 24 to vibrate.

## Description

### BACKGROUND OF THE INVENTION

### 1. Technical Field

The present invention relates to a vibration generator used for vibration testing and the like.

### 2. Related Art

In general, a vibration generator includes an exciter and a power amplifier that supplies electric power for operating the exciter (see, for example, Japanese Patent Application Laid-Open No. 2001-13033).

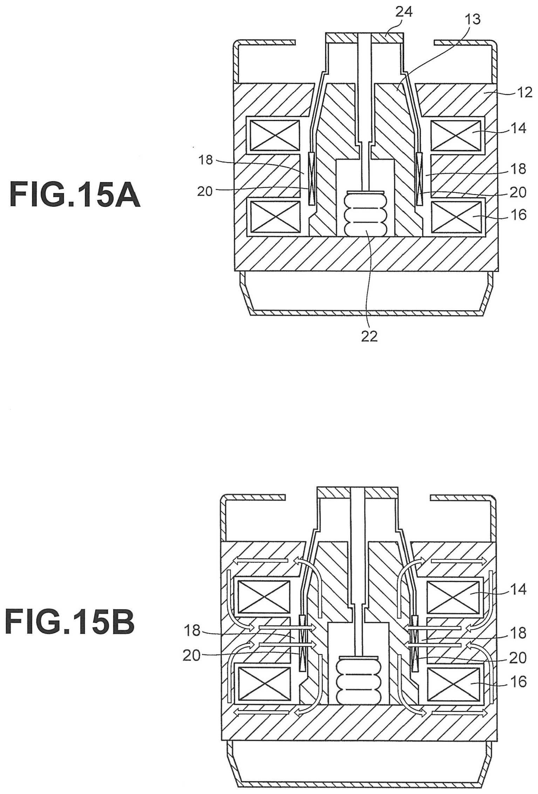

FIG. 15A illustrates a conventional exciter used for vibration testing of a product or the like. Magnetic circuit members 12 and 13 are provided. Field coils 14 and 16 are accommodated in the magnetic circuit member 12. The field coils 14 and 16 form an upper magnetic circuit and a lower magnetic circuit, as illustrated in FIG. 15B. As a result, magnetic flux is generated in a gap 18.

The drive coil 20 is disposed in the gap 18. Therefore, when a drive current for generating a desired vibration is supplied to the drive coil 20, the drive coil 20 can be moved upward and downward. A vibration table 24 is provided above the drive coil 20. Accordingly, the vibration table 24 on which a specimen, namely a product, is placed can be vibrated upward and downward. The vibration table 24 is supported by an upper support mechanism and a lower support mechanism, which are not illustrated.

When the exciter is used, a specimen is first fixed to the vibration table 24. In this state, air is supplied to an air suspension 22 provided below the vibration table 24, thereby moving the vibration table 24 upward. When the vibration table 24 reaches a midpoint of its maximum vertical stroke, the supply of air to the air suspension 22 is stopped, and a valve, which is not illustrated, is closed. In this manner, the initial setting is completed.

After the vibration table 24 has been raised to the midpoint as described above, drive power for generating a desired vibration is supplied from an amplifier to the drive coil 20, thereby vibrating the vibration table 24 and the specimen.

### SUMMARY OF THE INVENTION

The vibration generator described above has the following problems.

First, in the vibration generator described above, the vibration table 24 is raised to a predetermined reference position by using the air suspension 22. Therefore, in order to position the vibration table 24 at the predetermined reference position, it is necessary to control the air suspension 22 by using electrical control and air-pressure control, resulting in a complicated configuration.

Second, during excitation, the supply and discharge of air to and from the air suspension 22 are stopped, even when the excitation continues for a long period of time. Since no air leakage from the air suspension 22, including an inflow of air caused by leakage through a valve, is permissible, it has been difficult to select suitable air valves and piping components. According to solenoid-valve manufacturers, a minute amount of air leakage is generally considered unavoidable. In addition, careful attention has been required when carrying out the piping work.

In general, either a power amplifier incapable of supplying a direct current or a power amplifier capable of supplying a direct current may be used in a vibration generator. When the former type of power amplifier is used, air leakage causes the center position of excitation to shift, eventually activating an over-displacement protection function.

When the latter type of power amplifier is used, the center position that has been maintained by air is instead maintained by supplying a direct current. Consequently, a protection function may be activated as a result of the direct-current supply. Furthermore, when the excitation is completed and the power amplifier is stopped, the supply of the direct current is also stopped. As a result, the vibration table may rapidly descend from the center position at which it has been maintained. In some cases, the vibration table may collide with its lowermost end, thereby subjecting the test specimen to an unintended excitation load and creating a risk of damage to the test specimen.

Third, the excitation force that can be output by each vibration testing apparatus has an upper limit specified in the specifications of the apparatus. Therefore, when the mounted weight, including the weight of a jig, is unknown, the upper limit of the acceleration that can be output while the jig and a test specimen are mounted on the vibration testing apparatus cannot be determined. Accordingly, it has been necessary to determine the mounted weight in advance.

An object of the present invention is to solve at least one of the above-described problems and to provide a vibration generator having a simplified configuration while maintaining accuracy, or a vibration generator capable of readily measuring the mounted weight.

Several independent features of the present invention are set forth below. These features are independent of one another and are not required to be combined, but may be combined in any desired manner.
(1)A vibration generator according to the present invention comprises: a magnetic flux generation source configured to generate magnetic flux; a drive coil disposed in the magnetic flux generated by the magnetic flux generation source and configured to be driven by an electric current; a vibration table configured to be driven by a driving force of the drive coil and to support a test specimen thereon; a current application circuit configured to supply a drive current to the drive coil; initial control means configured to control the current application circuit, in an initial state, so as to supply a direct current to the drive coil as the drive current in order to raise the vibration table to a reference position; and
   drive control means configured to control the current application circuit, in a driving state, so as to superimpose a control current corresponding to a control signal on the direct current and supply the resulting current to the drive coil as the drive current in order to vibrate the vibration table.
   Since the vibration table is held at the reference position by the direct current, neither an air suspension nor control thereof is required, thereby simplifying the configuration of the apparatus.
(2) The vibration generator according to the present invention, comprises: a short-circuit switch configured to short-circuit both ends of the drive coil upon detection of an abnormal condition.
   Accordingly, when an abnormality occurs, an abrupt fall of the vibration table can be prevented by a counter-electromotive force.
(3) The vibration generator according to the present invention, comprises: a fall-prevention mechanism configured to operate upon detection of an abnormal condition so as to prevent the vibration table from falling.
   Accordingly, in the event of an abnormality, an abrupt fall of the vibration table can be prevented by a counter-electromotive force.
(4) The vibration generator according to the present invention, comprises: calculation means configured to calculate a weight-related value of the test specimen placed on the vibration table based on a value of the direct current supplied by the initial control means. Since a weight-related value of the test specimen is obtained based on the direct current used during the initial control, it is unnecessary to measure the weight of the test specimen before mounting the test specimen on the vibration table.
(5) (6) A vibration generator comprises: a magnetic flux generation source configured to generate magnetic flux; a drive coil disposed in the magnetic flux generated by the magnetic flux generation source and configured to be driven by an electric current; a vibration table configured to be driven by a driving force of the drive coil and to support a test specimen thereon;
   a current application circuit configured to supply a drive current to the drive coil; initial control means configured to control the current application circuit, in an initial state, so as to supply a direct current to the drive coil as the drive current in order to raise the vibration table to a reference position; and
   calculation means configured to calculate a weight-related value of the test specimen placed on the vibration table based on a value of the direct current supplied by the initial control means.

Since a weight-related value of the test specimen is obtained from the direct current used during the initial control, there is no need to measure the weight of the test specimen before mounting it on the vibration table.

In the embodiments, the "initial control means" corresponds to the difference calculator 84, the gain controller 86, or step S2.

In the embodiments, the "drive control means" corresponds to the adder 90 or step S6.

The term "apparatus" is a concept that includes not only an apparatus including one computer but also an apparatus including a plurality of the computers connected via a network or the like. Thus, in the case where the means (or may be a portion of the means) in the present invention is divided into the plurality of the computers, these plural computers correspond to the apparatus.

The "program" is a concept that includes not only a program directly executable by a CPU but also a source-format program, a compressed program, an encrypted program, a program working with an operating system to implement a function thereof, and the like.

### BRIEF DESCRIPTION OF THE DRAWINGS

FIG. 1 is a functional block diagram of a vibration generator according to an embodiment of the present invention.
FIG. 2 is a diagram illustrating the structure of an exciter.
FIG. 3 is a diagram illustrating the structure of the vibration table 24.
FIG. 4 is a diagram illustrating magnetic circuit members of the exciter.
FIG. 5A is a diagram illustrating a state in which the vibration table is incorporated into the magnetic circuit members.
FIG. 5B is a diagram illustrating a state in which the vibration table is held at a reference position.
FIG. 6 is a diagram illustrating a hardware configuration of a control circuit.
FIG. 7 is a diagram for explaining the function of a switch 72.
FIG. 8 is a diagram illustrating a hardware configuration in a case where the control circuit is implemented by a CPU.
FIG. 9 is a flowchart of a control program.
FIG. 10 is a flowchart of the control program.
FIG. 11 is a diagram illustrating a mechanism for preventing a fall by means of an air cylinder 80.
FIG. 12 is a diagram illustrating the mechanism for preventing a fall by means of the air cylinder 80.
FIG. 13 is a functional block diagram of a vibration generator according to a second embodiment.
FIG. 14 is a flowchart of a control program.
FIG. 15 is a diagram illustrating a conventional vibration generator.

### DESCRIPTION OF EMBODIMENTS

### 1. First Embodiment

### 1.1 Functional Configuration

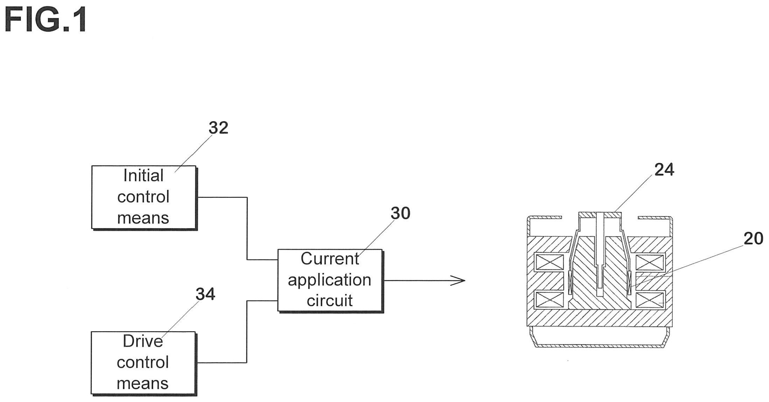

FIG. 1 illustrates a functional configuration of a vibration generator according to an embodiment of the present invention. A current application circuit 30 is a circuit configured to apply a drive current to a drive coil 20. Initial control means 32 controls the current application circuit 30 to apply a direct current to the drive coil 20. The initial control means 32 controls the magnitude of the direct current so that the vibration table 24 is raised by the drive coil 20 to a reference point, for example, a midpoint of a vertically movable range.

Upon completion of the initial setting as described above, drive control means 34 controls the current application circuit 30 so as to output a drive current obtained by superimposing a desired control current for vibration on the direct current. As a result, the drive current in which the desired control current is superimposed on the direct current is applied to the drive coil 20, thereby causing the vibration table 24 to vibrate.

In the present embodiment, the vibration table 24 is raised to the reference point by the direct current. Accordingly, an air suspension and control thereof are unnecessary, thereby simplifying the configuration of the apparatus.

### 1.2 Structure of Vibration Generator

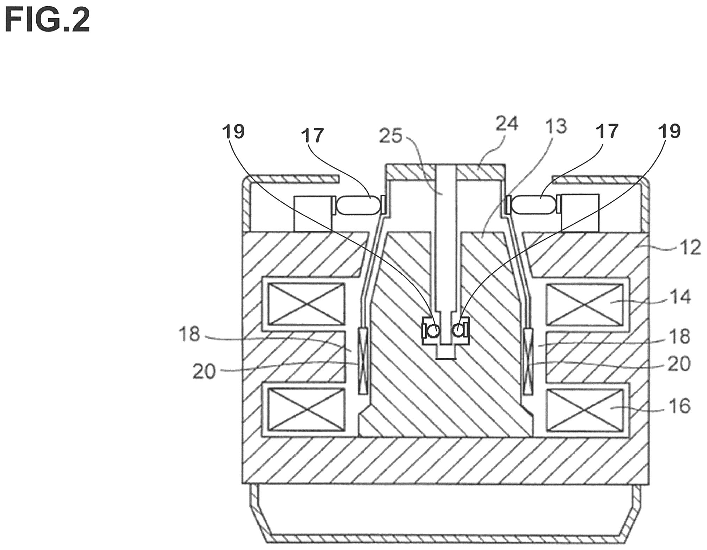

FIG. 2 is a cross-sectional view illustrating the structure of the exciter. Magnetic circuit members 12 and 13 are provided. Field coils 14 and 16 are accommodated in the magnetic circuit member 12. The field coils 14 and 16 generate magnetic flux in a gap 18.

A drive coil 20 is disposed in the gap 18. Therefore, when a drive current for generating a desired vibration is supplied to the drive coil 20, the drive coil 20 can be moved upward and downward. A vibration table 24 is provided above the drive coil 20. Accordingly, the vibration table 24 on which a specimen, namely a product, is placed can be vibrated upward and downward.

The vibration table 24 is provided with a shaft 25 for stabilizing its vertical movement. The vibration table 24 is supported by an upper support mechanism 17 and a lower support mechanism 19.

In the present embodiment, the air suspension 22 is omitted. Therefore, no cavity for accommodating the air suspension 22 is required, and the space that would otherwise form the cavity can be filled with a magnetic material. Accordingly, magnetic efficiency is improved.

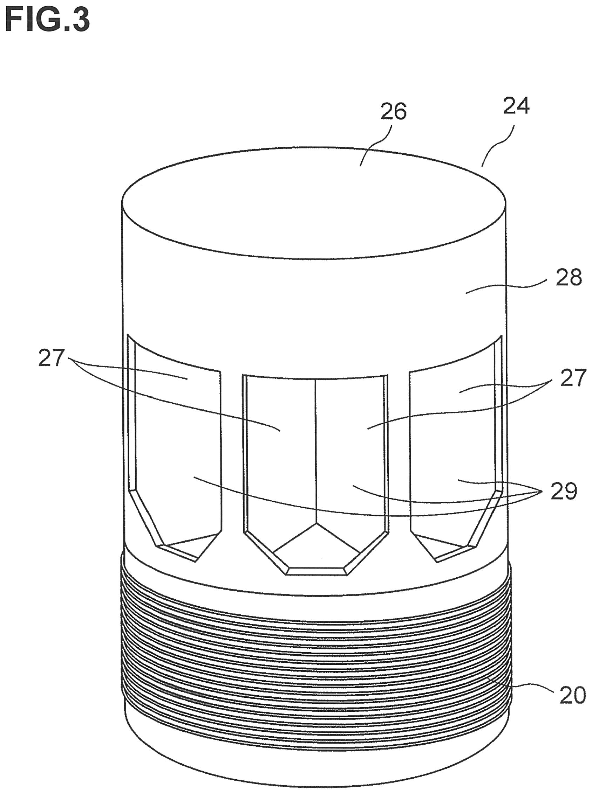

FIG. 3 illustrates the configuration of the vibration table 24. The vibration table 24 includes a housing 28 having a substantially cylindrical overall shape and a table 26 provided at an upper portion thereof for securing a test specimen.

Support plates 27 extending radially from the shaft 25 are provided below the table 26. The support plates 27 are fixed to the shaft 25 and the housing 28. Openings 29 are formed in the housing 28, except in regions in which the support plates 27 are fixed.

A lower portion of the housing 28 retains a cylindrical shape, and the drive coil 20 is wound around an outer circumference thereof.

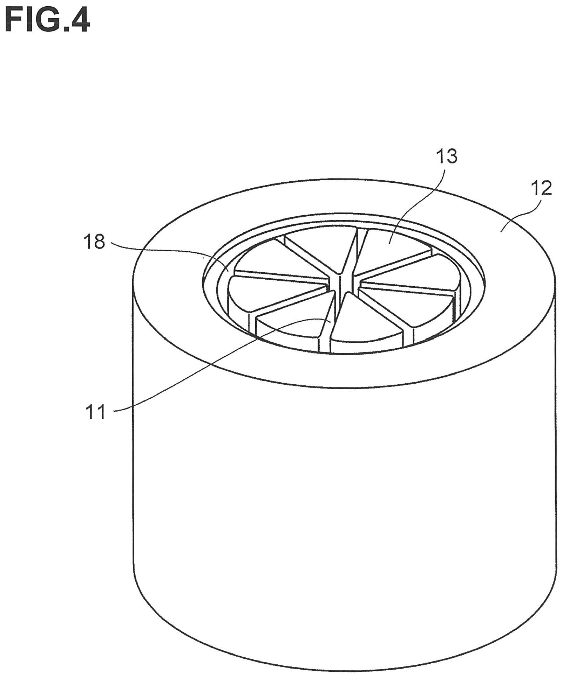

FIG. 4 illustrates the configurations of magnetic members 12 and 13. The magnetic member 12 is formed in a cylindrical shape having a bottom, and the magnetic member 13 is provided at a central portion thereof. The magnetic member 13 is composed of eight triangular prisms, which are arranged with predetermined gaps 11 therebetween. A gap 18 is also provided between the outer magnetic member 12 and the inner magnetic member 13. The cylindrical portion of the vibration table 24 illustrated in FIG. 3 is inserted into the gap 18.

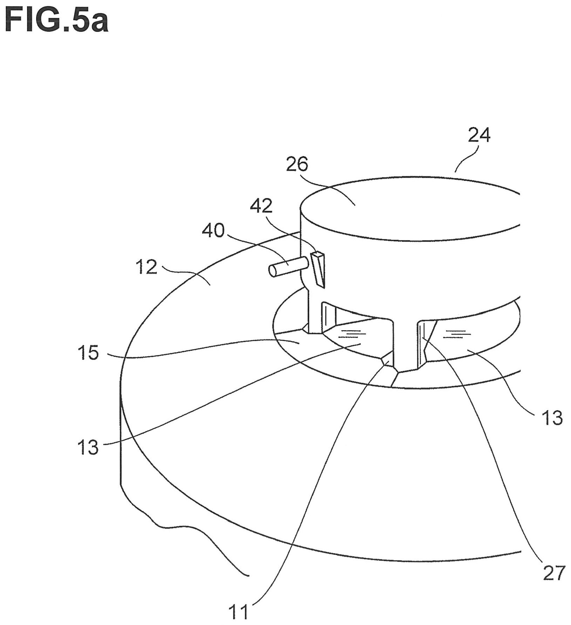

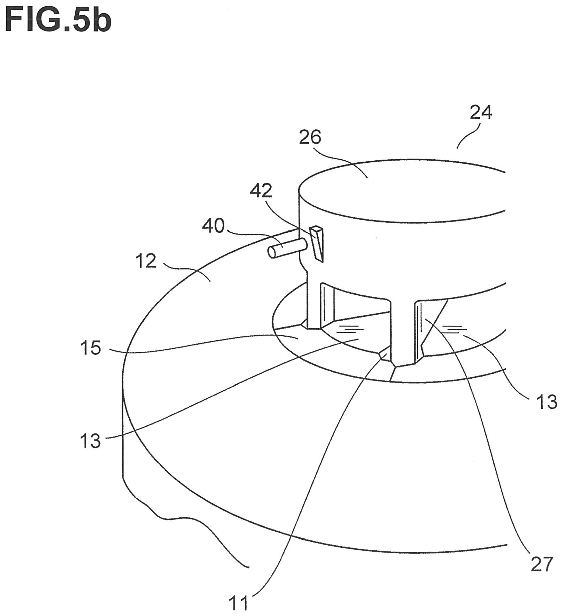

FIG. 5 illustrates a state in which the vibration table 24 is inserted into the gap 18 between the magnetic members 12 and 13. The cylindrical portion of the housing 28 of the vibration table 24 is inserted into the gap 18, and the support plates 27 of the vibration table 24 are inserted into the gaps 11. After the insertion, auxiliary magnetic members 15 are inserted between the magnetic member 12 and the magnetic member 13.

A (metallic) target 42 for the displacement sensor is provided on a side surface of the table 26. A displacement sensor 40 is provided so as to face the target 42. The target 42 is shaped such that the height of a portion thereof facing the displacement sensor 40 changes in accordance with the vertical movement of the vibration table 24. Accordingly, the displacement sensor 40 can detect the vertical position of the vibration table 24.

### 1.3 Configuration and Operation of Control Circuit 80

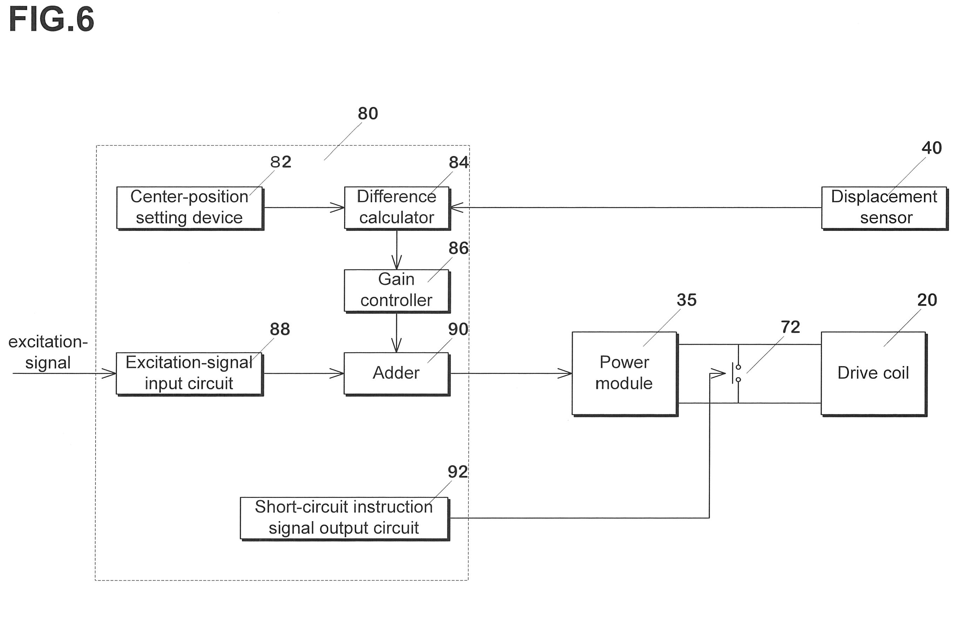

FIG. 6 illustrates the configuration of a control circuit 80. A center-position setting device 82 includes an operating unit for determining a center position of the vibration table 24, that is, an initial position of the vibration table 24 when no excitation signal is applied. An operator can determine a desired center position by operating the operating unit.

A difference calculator 84, which is constituted by an operational amplifier or the like, calculates a difference between an output of the displacement sensor 40, that is, the position of the vibration table 24, and the center position determined by the center-position setting device 82. The calculated difference is supplied to a gain controller 86.

The gain controller 86 increases or decreases its direct-current output so that the difference approaches zero. The direct-current output of the gain controller 86 is supplied to a power module 35 through an adder 90. The power module 35 amplifies the supplied signal and supplies electric power to the drive coil 20.

The position of the vibration table 24 changes in accordance with the magnitude of the electric power supplied to the drive coil 20, and the change in position is detected by the displacement sensor 40. Accordingly, a feedback circuit including the displacement sensor 40, the difference calculator 84, the gain controller 86, and the drive coil 20 holds the vibration table 24 at the center position set by the center-position setting device 82 (see FIG. 5B). In this manner, the initial control is completed.

When the vibration table 24 is held at the initial position by the initial control as described above, an excitation signal from a vibration control circuit, namely, a waveform signal representing a desired vibration, is then received by an excitation-signal input circuit 88.

The excitation-signal input circuit 88 receives an analog excitation signal. Alternatively, the excitation-signal input circuit 88 may receive an excitation signal in the form of digital data and convert the digital data into an analog signal. The analog excitation signal is supplied to the adder 90, which is constituted by an operational amplifier or the like. During the initial control, the adder 90 is controlled so as to output a direct current for holding the vibration table 24 at the initial position. Accordingly, the adder 90 outputs an excitation signal having the direct current as its center value.

The power module 35 amplifies the output signal and supplies the amplified signal to the drive coil 20. Thus, the vibration table 24 is vibrated in accordance with the excitation signal about the set initial position. In this manner, the drive control is performed.

When control is stopped, for example, due to occurrence of a system abnormality or completion of a vibration test, the vibration table 24 may fall and impart an unintended vibration to the test specimen.

To address this issue, a switch 72 is provided in the present embodiment. A short-circuit instruction signal output circuit 92 outputs a short-circuit instruction signal upon receiving a stop signal from the vibration control circuit. The short-circuit instruction signal output circuit 92 also outputs the short-circuit instruction signal when it receives, from the exciter, a signal indicating an abnormal condition, such as when a drive current exceeding a limit value is output, when the vibration table 24 vibrates beyond a predetermined limit, or when an abnormality occurs in a power supply. The short-circuit instruction signal output circuit 92 further outputs the short-circuit instruction signal upon receiving an emergency stop signal generated by an operator operation from a thermostatic chamber or the like.

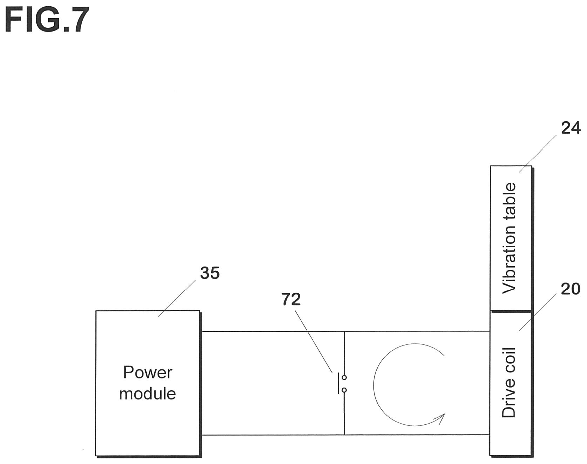

When the short-circuit instruction signal is supplied to the switch 72, the switch 72 is turned on. If a static magnetic field generated by the field coils 14 and 16 is present, an electric current is thereby generated in the drive coil 20 falling together with the vibration table 24, as illustrated in FIG. 7, so as to produce a driving force in a direction opposing the fall. As a result, the fall of the vibration table 24 is braked, allowing the vibration table 24 to be lowered gently.

In the event of a power failure or the like, electric power is no longer supplied to the field coils 14 and 16 for generating the static magnetic field. However, owing to the inductive nature of the field coils 14 and 16, the magnetic flux does not change abruptly even when the supply of electric power is interrupted, and the static magnetic field remains for approximately the period of time during which the above-described braking action is required. Accordingly, even when the field current is no longer supplied due to a power failure, the braking action can be provided in the same manner.

Preferably, the switch 72 is configured to turn on when the control circuit 80 stops operating due to loss of its power supply. For example, a switch may be used whose normal position is the on position and which is maintained in the off position only while a signal is supplied from the control circuit 80. In this case, when the control circuit 80 stops operating, the switch returns to its normal on position.

### 1.4 Configuration of Control Circuit 80 Using a CPU

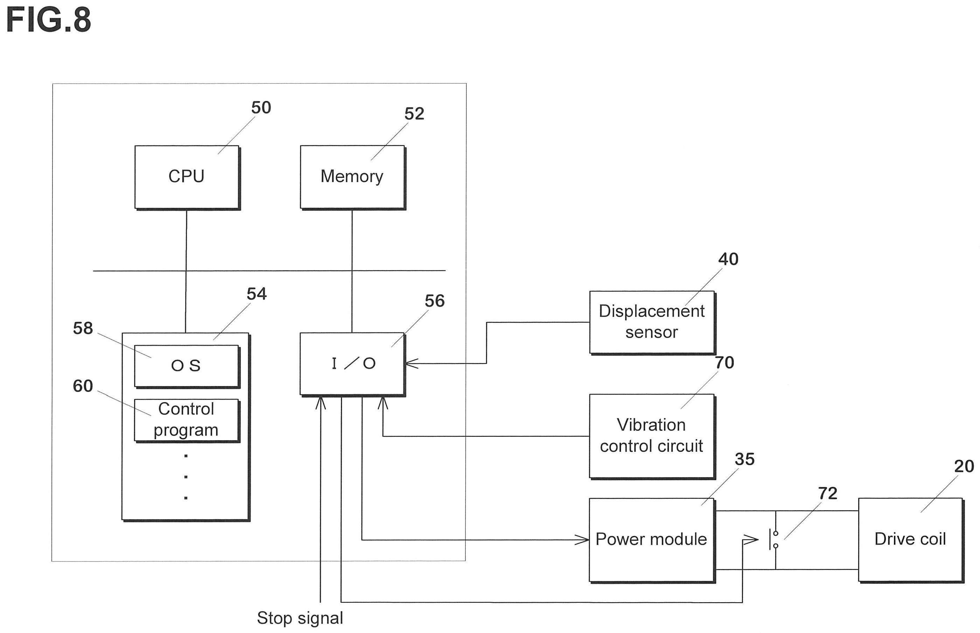

FIG. 8 illustrates a hardware configuration in which the control circuit 80 is implemented using a CPU. In the present embodiment, the control circuit 80 includes a CPU 50, a memory 52, an SSD 54, and an I/O port 56. An operating system 58, such as TRON, and a control program 60 are stored in the SSD 54. The control program 60 performs its functions in cooperation with the operating system 58. Alternatively, the control program 60 may be configured to operate independently without the operating system 58.

The displacement sensor 40, the vibration control circuit 70, and power module 35 (the amplifier) serving as the current application circuit are connected to the I/O port 56. The vibration control circuit 70 performs control and outputs a control signal so that a desired vibration can be applied to a test specimen fixed to the table 26. The power module 35 is a circuit configured to output a drive current to the drive coil 20.

In the present embodiment, a switch 72 is provided for short-circuiting the output of the power module 35. The switch 72 can be controlled by the CPU 50 via the I/O port 56.

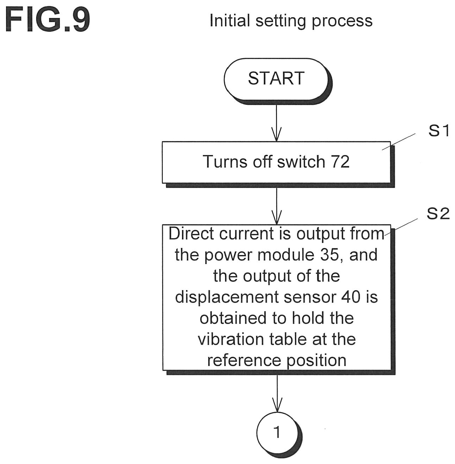

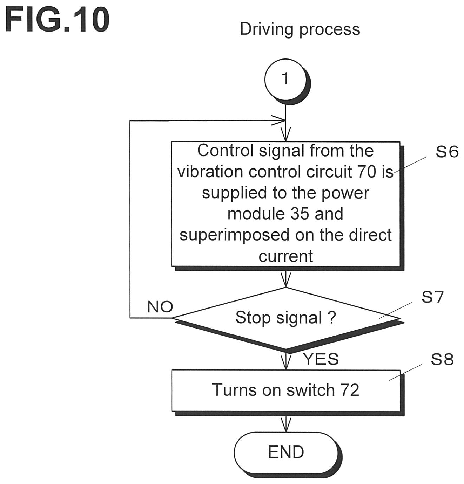

FIGS. 9 and 10 are flowcharts of the control program 60. FIG. 9 illustrates an initial setting process, and FIG. 10 illustrates a driving process.

In the initial setting process illustrated in FIG. 9, the CPU 50 turns off the switch 72 (step S1).

Next, the CPU 50 causes the power module 35 to output a direct current, obtains an output from the displacement sensor 40, and performs control so as to hold the vibration table 24 at a reference position, for example, a midpoint of its vertically movable range (step S2). As a result, the vibration table 24 is raised from the state in which it is located at its lowermost position, as illustrated in FIG. 5A, and is held at the reference position, as illustrated in FIG. 5B.

Upon completion of the initial setting as described above, the CPU 50 supplies a control signal from the vibration control circuit 70 to the power module 35 (step S6). The vibration control circuit 70 outputs a control signal, namely, a waveform signal, for applying a desired vibration to a test specimen fixed to the vibration table 24. In response to the control signal, the power module 35 outputs, as a drive current, a control current corresponding to the control signal superimposed on the direct current, and supplies the drive current to the drive coil 20. Accordingly, the vibration table 24 vibrates upward and downward based on the control signal about the reference position illustrated in FIG. 5B.

In the manner described above, the test specimen fixed to the vibration table 24 can be vibrated.

If an abnormality occurs in the exciter, for example, if a drive current exceeding a limit value is output, if the vibration table 24 vibrates beyond a predetermined limit, or if an abnormality occurs in the power supply, the vibration table 24 may fall and impart an unintended vibration to the test specimen.

To address this issue, the switch 72 is provided in the present embodiment. In the event of such an abnormal condition, a stop signal is supplied to the CPU 50. Upon receiving the stop signal, the CPU 50 turns on the switch 72 (step S8). If a static magnetic field generated by the field coils 14 and 16 is present, an electric current is thereby generated in the drive coil 20 falling together with the vibration table 24, as illustrated in FIG. 7, so as to produce a driving force in a direction opposing the fall. As a result, the fall of the vibration table 24 is braked, allowing the vibration table 24 to be lowered gently.

### 1.5 Modifications and Other Examples

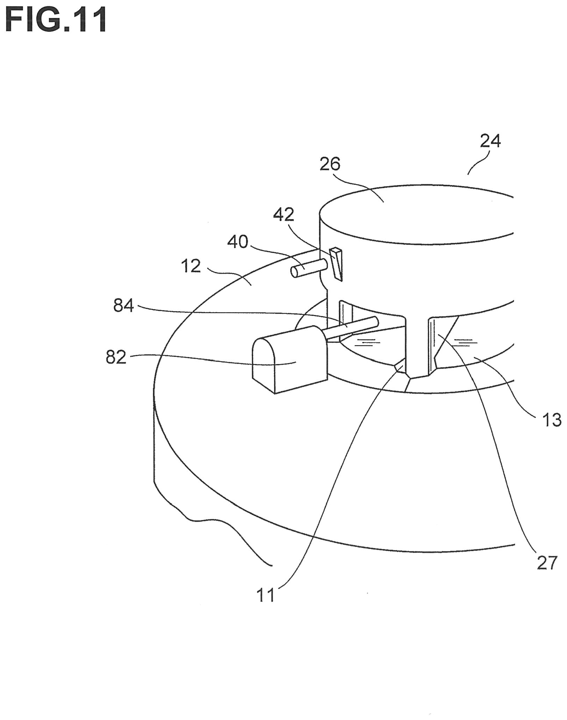

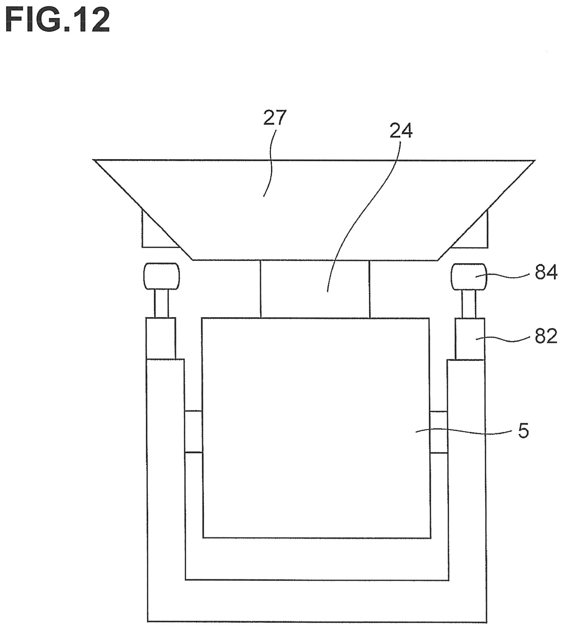

(1) In the above-described embodiment, both ends of the drive coil 20 are short-circuited by the switch 72, which serves as a short-circuit switch, so that counter-electromotive force is generated during a fall and used as a braking force. Alternatively, or additionally, an air cylinder 82 may be provided as a fall-prevention mechanism, as illustrated in FIG. 11. Upon receiving a stop signal, the control circuit 80 causes a rod 84 of the air cylinder 82 to project so as to prevent the vibration table 24 from falling. In FIG. 11, the rod 84 indicated by a broken line is in a projected state. Preferably, a plurality of air cylinders 82 are provided.
   Further, when an auxiliary table 27 is provided on the vibration table 24 as illustrated in FIG. 12, the air cylinder 82 may be provided below the auxiliary table 27 as the fall-prevention mechanism. During normal operation, the rod 84 of the air cylinder 82 is retracted so as not to interfere with vibration. Upon receipt of a stop signal, the CPU 50 causes the rod 84 of the air cylinder 82 to project. This makes it possible to prevent the vibration table 24 from falling abruptly.
(2) In the above-described embodiment, the midpoint of the vertically movable range of the vibration table is used as the reference position. However, a position below or above the midpoint may be used as the reference position.
(3) In the above-described embodiment, the static magnetic field is generated by the field coils 14 and 16. However, the static magnetic field may be generated by a permanent magnet.
(4) In the above-described embodiment, the displacement sensor 40 is used to detect the position of the vibration table 24. However, another sensor, such as a laser displacement sensor, may be used.
(5) In the above-described embodiment, no air suspension is provided. However, an air suspension may be provided as in the conventional apparatus. During normal operation, the air suspension may be opened and kept inactive. In an emergency, such as upon receipt of a stop signal, the air suspension may be activated by closing a discharge valve and supplying air thereto, so as to prevent the vibration table 24 from falling. In this case, because the air suspension is used only for fall prevention, precise adjustment or control is unnecessary.
(6) In the above-described embodiment, the field coils are used as the magnetic flux generation source. However, a permanent magnet may be used as the magnetic flux generation source.
(7) The above-described embodiment and the modifications thereof are also applicable to the other embodiments.

### 2. Second Embodiment

### 2.1 Functional Configuration

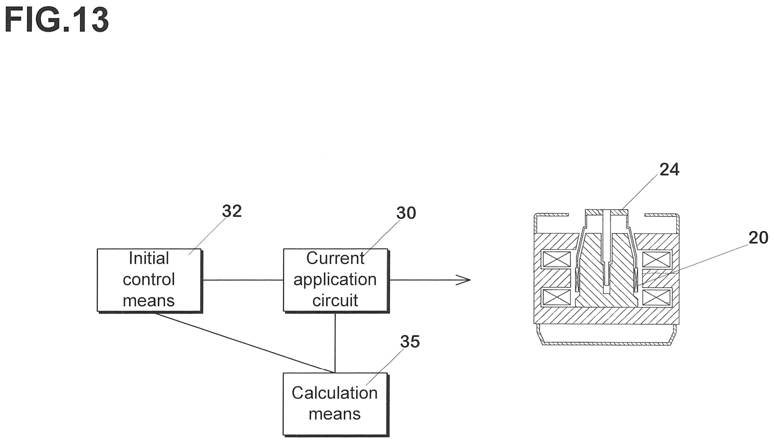

FIG. 13 illustrates a functional configuration of a vibration generator according to another embodiment. A current application circuit 30 is a circuit configured to apply a drive current to a drive coil 20. Initial control means 32 controls the current application circuit 30 to apply a direct current to the drive coil 20. The initial control means 32 controls the magnitude of the direct current so that the vibration table 24 is raised by the drive coil 20 to a reference point, for example, a midpoint of a vertically vibratable range.

Calculation means 35 calculates a weight-related value of a test specimen placed on the vibration table 24 based on the value of the current required by the initial control means 32 to raise the vibration table 24 to the reference point.

In the present embodiment, the weight-related value of the test specimen is calculated based on the value of the direct current used during the initial control. Accordingly, a weight-related value, such as the weight of the test specimen, can be obtained without providing a weighing scale or the like.

### 2.2 Structure of Vibration Generator

The structure of the vibration generator is the same as that illustrated in FIGS. 2 to 5 in the first embodiment.

### 2.3 Configuration and Operation of Control Circuit 80

The configuration of the control circuit 80 is the same as that illustrated in FIG. 6 or FIG. 8 in the first embodiment.

When the control circuit 80 is configured as illustrated in FIG. 6, the center-position setting device 82 is set to a position predetermined for calculation purposes, for example, the center of the movable range. A test specimen is fixed to the vibration table 24, and a value of the drive current required to maintain the vibration table 24 at the predetermined position is obtained. This can be accomplished by measuring the direct current output from the power module 35.

Next, the weight of the test specimen is calculated based on the measured direct current. This calculation process may be performed by a computer or the like. The total weight of the vibration table 24 and the test specimen is proportional to the value of the direct current required to hold the vibration table 24 at the reference position. Accordingly, the weight of the test specimen can be calculated as described below.

Let m(kg) denote the mass of the vibration table 24, Bl(N/A) denote the force factor of the exciter, I(A) denote the drive current (peak value), a(m/s² ) denote the acceleration during excitation, and F(N) denote the excitation force of the exciter. The following relationship is then satisfied: $F = m * a = BL * I$ (1)

It is assumed that F, a, and I are rated values of the exciter and are known.

When a test specimen having a mass of M(kg) is fixed to the vibration table 24 and the vibration table 24 is held at the reference position by supplying a direct current Idc, assuming that the gravitational acceleration is 9.8(m/s²), the following relationship can be expressed in the same manner as above: $Fdc = \left(m+M\right) * 9.8 = BL * Idc$ (2)

From Equations (1) and (2), the mass M of the test specimen can be obtained as follows: $M = \left(Idc/I*a/9.8-1\right) * m$

Upon completion of the initial setting as described above, a required maximum excitation force is calculated based on the mass of the test specimen and the maximum acceleration to be applied during the test. Specifically, the required maximum excitation force is calculated as follows: $\begin{matrix}required maximum excitation force \\ = moving mass * maximum acceleration\end{matrix}$

If the calculated required maximum excitation force is less than the rated excitation force of the vibration generator, the vibration test is started. However, if the calculated required maximum excitation force exceeds the rated excitation force of the vibration generator, the vibration test is not started.

The driving process is the same as that illustrated in FIG. 10 in the first embodiment.

### 2.4 Configuration of Control Circuit 80 Using a CPU

The hardware configuration in which the control circuit 80 is implemented using a CPU is the same as that illustrated in FIG. 8.

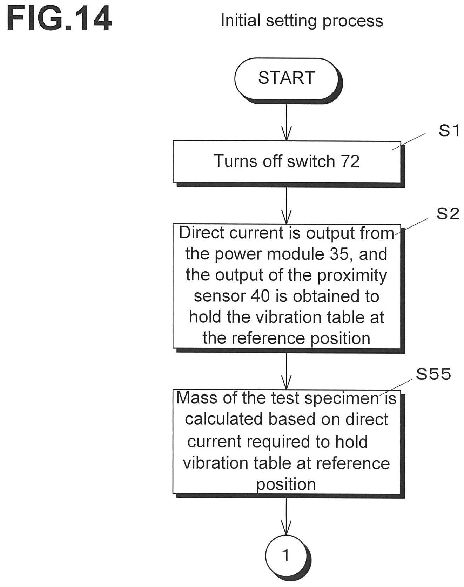

FIGS. 14 and 10 are flowcharts of the control program 60. FIG. 14 illustrates an initial setting process, and FIG. 10 illustrates a driving process.

In the initial setting process illustrated in FIG. 14, the CPU 50 turns off the switch 72 (step S1).

Next, the CPU 50 causes the power module 35 to output a direct current, obtains an output from the displacement sensor 40, and performs control so as to hold the vibration table 24 at a reference position, for example, a midpoint of its vertically movable range (step S2). As a result, the vibration table 24 is raised from the state in which it is located at its lowermost position, as illustrated in FIG. 5A, and is held at the reference position, as illustrated in FIG. 5B.

Next, the CPU 50 calculates the mass of the test specimen based on the determined direct current (step S55). The total mass of the vibration table 24 and the test specimen is proportional to the value of the direct current required to hold the vibration table 24 at the reference position. Accordingly, the mass of the test specimen can be calculated as described below.

Let m(kg) denote the mass of the vibration table 24, BL(N/A) denote the force factor of the exciter, I(A) denote the drive current (peak value), a(m/s² ) denote the acceleration during excitation, and F(N) denote the excitation force of the exciter. The following relationship is then satisfied: $F = m * a = BL * I$ (1)

It is assumed that F, a, and I are rated values of the exciter and are known.

When a test specimen having a mass of M(kg) is fixed to the vibration table 24 and the vibration table 24 is held at the reference position by supplying a direct current Idc, assuming that the gravitational acceleration is 9.8(m/s²), the following relationship can be expressed in the same manner as above: $Fdc = \left(m+M\right) * 9.8 = BL * Idc$ (2)

From Equations (1) and (2), the mass M of the test specimen can be obtained as follows: $M = \left(Idc/I*a/9.8-1\right) * m$

Upon completion of the initial setting as described above, a required maximum excitation force is calculated based on the mass of the test specimen and the maximum acceleration to be applied during the test. Specifically, the required maximum excitation force is calculated as follows: $\begin{matrix}required maximum excitation force \\ = moving mass * maximum acceleration\end{matrix}$

If the calculated required maximum excitation force is less than the rated excitation force of the vibration generator, the CPU 50 starts the vibration test. However, if the calculated required maximum excitation force exceeds the rated excitation force of the vibration generator, the CPU 50 displays a notification to that effect and does not start the vibration test.

The driving process is the same as that illustrated in FIG. 10 in the first embodiment.

### 2.5 Modifications and Other Examples

(1) In the above-described embodiment, the mass of the test specimen is calculated using a calculation formula. However, the relationship between the mass of a test specimen and the direct current may be measured in advance, and the mass of the test specimen may be calculated based on the measured relationship.
(2) In the above-described embodiment, the mass of the test specimen is calculated. However, a mass ratio among a plurality of test specimens may instead be calculated. In this case, without calculating the individual mass of each test specimen based on the direct current, the mass ratio among the test specimens can be calculated based on the ratio of the direct currents required to raise the respective test specimens to the reference position.
(3) The above-described embodiment and the modifications thereof are also applicable to the other embodiments.

## Claims

1. A vibration generator comprising:
a magnetic flux generation source configured to generate magnetic flux;
a drive coil disposed in the magnetic flux generated by the magnetic flux generation source and configured to be driven by an electric current;
a vibration table configured to be driven by a driving force of the drive coil and to support a test specimen thereon;
a current application circuit configured to supply a drive current to the drive coil;
initial control means configured to control the current application circuit, in an initial state, so as to supply a direct current to the drive coil as the drive current in order to raise the vibration table to a reference position; and
drive control means configured to control the current application circuit, in a driving state, so as to superimpose a control current corresponding to a control signal on the direct current and supply the resulting current to the drive coil as the drive current in order to vibrate the vibration table.

2. The vibration generator according to claim 1, further comprising:
a short-circuit switch configured to short-circuit both ends of the drive coil upon detection of an abnormal condition.

3. The vibration generator according to claim 1, further comprising:
a fall-prevention mechanism configured to operate upon detection of an abnormal condition so as to prevent the vibration table from falling.

4. The vibration generator according to claim 1, further comprising:
calculation means configured to calculate a weight-related value of the test specimen placed on the vibration table based on a value of the direct current supplied by the initial control means.

5. A vibration generator comprising:
a magnetic flux generation source configured to generate magnetic flux;
a drive coil disposed in the magnetic flux generated by the magnetic flux generation source and configured to be driven by an electric current;
a vibration table configured to be driven by a driving force of the drive coil and to support a test specimen thereon;
a current application circuit configured to supply a drive current to the drive coil;
initial control means configured to control the current application circuit, in an initial state, so as to supply a direct current to the drive coil as the drive current in order to raise the vibration table to a reference position; and
calculation means configured to calculate a weight-related value of the test specimen placed on the vibration table based on a value of the direct current supplied by the initial control means.

6. A control program for implementing, by a computer, a controller of a vibration generator, the control program causing the computer to function as:
initial control means configured to control a current application circuit, in an initial state, so as to supply a direct current to a drive coil as a drive current in order to raise a vibration table to a reference position; and
calculation means configured to calculate a weight-related value of a test specimen placed on the vibration table based on a value of the direct current supplied by the initial control means.
